# EUROPÄISCHE PATENTSCHRIFT

(11) **EP 1 759 252 B1**
(45) Veröffentlichungstag und Bekanntmachung des Hinweises auf die Patenterteilung: **03.03.2010**
(21) Anmeldenummer: 05760881.2
(22) Anmeldetag: 27.06.2005
(51) Int. Cl.: G05B 19/418

(54) **AS-INTERFACE-NETZWERK FÜR GROSSE ENTFERNUNGEN**
AS INTERFACE NETWORK FOR LARGE DISTANCES
RÉSEAU D'INTERFACES ACTIONNEURS-CAPTEURS POUR GRANDES DISTANCES

(30) Priorität: 25.06.2004 DE 102004030767
(43) Veröffentlichungstag der Anmeldung: 07.03.2007
(73) Patentinhaber: SIEMENS AKTIENGESELLSCHAFT, 80333 München (DE)
(72) Erfinder: INDEFREY, Klaus, 90489 Nürnberg (DE); SCHIFF, Andreas, 88097 Eriskirch (DE)
(86) Internationale Anmeldenummer: PCT/EP2005/052991
(87) Internationale Veröffentlichungsnummer: WO 2006/000585

(56) Entgegenhaltungen:
- DE-A1- 19 710 137
- GERHARD SCHNELL: "Bussysteme in der Automatisierungs- und Prozesstechnik" Januar 2003 (2003-01), VIEWEG , BRAUNSCHWEIG/WIESBADEN , XP002344553 Seite 153 - Seite 156

## Beschreibung

Die Erfindung betrifft ein AS-Interface-Netzwerk mit einer Mehrzahl von Kommunikationsteilnehmern, die als Master oder als Sensoren und/oder Aktuatoren ausgebildet über jeweils ein Anpassschaltung an eine Busleitung angeschlossen sind und über mindestens ein an der Busleitung angeschlossenes Netzteil mit Strom versorgt werden, wobei eine Datenübertragung zwischen Kommunikationsteilnehmern vorgesehen ist.

Unter dem Begriff "Aktuator-Sensor-Interface für die Automation" wird ein System aus einer Busleitung mit daran angeschlossenen Kommunikationsteilnehmern verstanden.

In dem Buch Werner Kriesel, Otto W. Madelung (Hrsg.): ASI - das Aktuator-Sensor-Interface für die Automation, Hansa-Verlag, München, Wien, 1994, wird im Abschnitt 6.3 zum Thema "Repeater und Netzerweiterungen" die Möglichkeit beschrieben, derartige ASI-Netzwerke auch über größere Entfernungen zu erstrecken.

ASI versteht sich als "Interface", nämlich als Schnittstelle für Sensoren und Aktuatoren, die an eine Mikrorechner-Steuerung angeschlossen sind.

ASI ist daher auch kein Feldbus, sondern speziell für den Informationsaustausch von Sensoren und Aktuatoren mit einer Steuerung konzipiert worden und liegt damit unterhalb dessen, was heute als "Feldbus-Ebene" genannt wird.

Kernstück von ASI ist ein Slave-Chip, mit dem die Sensoren/Aktuatoren an die ASI-Leitung digital und zugleich kostengünstig angekoppelt werden. In jedem Abfragezyklus werden 6 Bit Netto-Informationen vom Master zu jedem Slave und 4 Bit zurück seriell übertragen. Sie können als Ein- oder als Ausgangsdaten genutzt werden. Die ASI-Leitung ist im Allgemeinen ein ungeschirmtes Zwei-Leiter-Flachbandkabel oder ein Standard-Rundkabel, über das gleichzeitig Signale und Energie übertragen werden.

AS-Interface-Netzwerke sind auf eine maximale Ausdehnung von etwas mehr als 100 m begrenzt, wenn keine Repeater eingesetzt werden sollen. Ursache für die Begrenzung ist die Verzerrung des Übertragungssignals durch Reflexionen am nicht abgeschlossenen Ende der Leitung und Schwingungen auf der Leitung, die durch die Sendepulse ausgelöst werden. Auch mit Repeatern ist die Netzwerk-Ausdehnung nur um weitere 200 m verlängerbar. Es gibt auch andere Vorschläge (u.a. Datenlichtschranke), die aber alle die Standard AS-Interface-Analogschaltung an der Schnittstelle verwenden.

Es gibt einen neueren Lösungsvorschlag mit Abschluss-Impedanzen, der auf den gleichen Anmelder zurückgeht (DE-GM 202004004637.7), die eine Verlängerung der Leitung ohne Repeater erlauben.

Aber auch hier sind die physikalischen Randbedingungen so, dass eine Verlängerung über 200 m bis 300 m Netzwerk-Ausdehnung nicht möglich ist. Ein Grund dafür ist, dass das AS-Interface-Netzteil mit der Datenentkopplung nicht optimal auf den Wellenwiderstand der Leitung abgestimmt ist, von dort also Reflexionen ausgehen, die die Übertragungssignale stören. Ein weiterer Grund ist, dass bei Teilnehmern, die weit entfernt vom Netzteil mit seiner pulsformenden Datenentkopplung angeordnet sind, die Umsetzung des Stromsignals in ein Spannungssignal nicht mehr korrekt funktioniert. Der Grund ist die Impedanz der Leitung zwischen dem Teilnehmer und dem Netzteil, die nicht mehr vernachlässigbar klein ist gegenüber den Impedanzen der Datenentkopplung. Dadurch wird das Signal so stark verzerrt, dass es ein spezifikationsgemäßer AS-Interface-Empfänger nicht mehr fehlerfrei dekodieren kann.

In zahlreichen Applikationen, z. B. in der Transport- und Fördertechnik wäre es wünschenswert, wenn mit AS-Interface auch größere Entfernungen bis zu mehreren Kilometern überbrückbar wären. Eine typische Applikation ist etwa die Überwachung von Förderbändern in Steinbrüchen. Hier ist es Aufgabe, mit Hilfe von Schlupfwächtern zu überwachen, ob einzelne Bänder der Förderstrecke überlastet sind. Ist dies der Fall, so müssen einzelne oder alle Bänder sofort stillgesetzt werden, um größere Schäden zu verhindern. Ferner sollen NOTAUSSchalter in regelmäßigen Abständen montiert werden können. Auch in der Prozess- und Verfahrenstechnik und der Gebäudeautomatisierung sind oft größere Entfernungen zwischen einzelnen Feldgeräten an einem Bus zu überbrücken.

Eine weitere Aufgabe könnte darin bestehen, mehrere örtlich weit voneinander entfernt liegende Anlagenteile miteinander zu verbinden und von einer Steuerung aus zu steuern. Das AS-Interface-Netzwerk soll also in mehrere Teilnetze aufgeteilt werden können, die physikalisch getrennt sind, logisch aber zusammengehören.

Die Aufgabe besteht darin, das oben genannte AS-Interface-Netzwerk so weiterzubilden, dass Daten auf der Busleitung auch über größere Entfernungen möglichst unverzerrt übertragen werden. Unter größeren Entfernungen sollen hier Netzwerk-Ausdehnungen von mehr als 300 m ohne einen Repeater verstanden werden.

Die Lösung der gestellten Aufgabe erfolgt mit den Merkmalen nach Anspruch 1.

Wesentliches Merkmal der Erfindung ist, dass dem Netzteil eine neuartige Datenentkopplung in Richtung auf die Busleitung zugeordnet ist und dass jeder Kommunikationsteilnehmer über eine Anpassschaltung mit der Busleitung verbunden ist.

Vorteilhafte Weiterbildungen der Erfindung sind den Unteransprüchen zu entnehmen.

Vorteil der erfindungsgemäßen Maßnahmen ist, dass nunmehr keine Reflektionen auf der Busleitung, mehr gegeben sind, auch wenn die Bus-Länge wesentlich größer ist als 300 m. Dies liegt einerseits an der optimalen Anpassung von an den beiden Enden der Busleitung angeschlossenen Abschlusswiderständen und andererseits an der Datenentkopplung des Netzteils in Richtung auf die Busleitung und zusätzlichen Anpassschaltungen der einzelnen Kommunikationsteilnehmer an die Busleitung, die neu gegenüber dem Stand der Technik sind. Mit diesem Konzept wird ein neuartiger Lösungsansatz verwirklicht:
Die Datenentkopplung vor dem Netzteil (Konstantspannungsquelle) besteht in einer bevorzugten Ausgestaltung aus zwei Drosseln mit einer Induktivität von mehr als 2000µH ohne parallel geschaltete Widerstände.

Die Impedanz der Datenentkopplung ist damit deutlich größer als die Abschlussimpedanz der Busleitung.

Die Topologie des Netzwerkes wird auf eine Linienstruktur mit kurzen Abzweigen beschränkt.

Es werden zwei Abschlusswiderstände an beiden Enden der Busleitung von je ca. 120 Ohm (in Reihe mit einer Kapazität zur Abblockung der Gleichspannung von ca. 500nF) vorgesehen. Die Widerstände werden in ihrer Größe so gewählt, dass sie die Busleitung optimal abschließen und Reflexionen vollständig unterdrücken.

Zwischen das Netzwerk und die Kommunikationsteilnehmer (also Master, Slave, Safety-Monitor, Diagnosegeräte und dgl.) werden entweder die erfindungsgemäßen Anpassschaltungen zwischengeschaltet oder die Empfängerschaltung des Slaves modifiziert.

Das Signal auf der Busleitung ist auch von entfernt auf der Busleitung aufsitzenden Kommunikationsteilnehmern stets gleich ist und unabhängig von dem Ort des sendenden und des empfangenden Kommunikationsteilnehmers auf der Busleitung.

Die Datenübertragung führt an jedem Ort der Leitung zu einer Folge von Spannungsänderungen, die von einem Empfänger, der an der Anpassschaltung angeschaltet ist, leicht ausgewertet werden können. Diese Pulse entsprechen nicht den in der AS-Interface-Spezifikation definierten Spannungspulsen, sondern im Wesentlichen deren Integral.

Die empfangenen Spannungspulse werden in der Anpassschaltung selbst oder in dem an die Anpassschaltung angeschlossenen AS-Interface-Netzteil in ihre nach der AS-Interface-Spezifikation vorgesehene Form gebracht. Der Empfänger setzt die detektierten Spannungspulse in der Anpassschaltung in Strompulse um. Diese werden dann in der Anpassschaltung selbst oder im AS-Interface-Netzteil des angeschlossenen Teilnetzwerkes differenziert und stehen so dem Kommunikationsteilnehmer spezifikationsgemäß zur Verfügung.

An eine Anpassschaltung kann nicht nur ein AS-Interface-Teilnehmer (Master, Slave, Safety Monitor, Diagnosegerät und dgl.) angeschlossen werden, sondern auch eine Gruppe von AS-Interface-Teilnehmern. Es kann also an jedem Anschlusspunkt ein AS-Interface-Teilnetz aufgebaut werden. Natürlich muss der von der Anpassschaltung zur Verfügung gestellte DC-Strom ausreichend sein, um alle angeschlossenen Teilnehmer mit elektrischer Energie zu versorgen. Alternativ ist es möglich, den Empfänger des Kommunikationsteilnehmers so zu modifizieren, dass er die Pulse direkt dekodiert. Dann kann die Anpassschaltung entfallen.

Die typische Laufzeit eines Pulses auf der Leitung liegt bei 0,6µs/100m. Der bei den spezifizierten Kabeldaten maximal mögliche Wert liegt bei ca. 1µs/100m. Die AS-Interface-Spezifikation sieht derzeit vor, dass der Master eine maximale Pausenzeit von 61µs noch toleriert. Hiervon entfallen max. 30µs auf die Reaktionszeit des Slaves, es bleiben also noch 31µs übrig für Laufzeiten auf der Leitung und evtl. Verzögerungszeiten von dazwischengeschalteten Repeatern. Daraus ergibt sich eine Begrenzung der Netzausdehnung auf typisch 2,5 km, wenn der Master an einem Ende der Leitung angeordnet ist und typisch 5 km, wenn die Master in der Mitte der Leitung angeordnet ist. Unter Schlechtest-Bedingungen wäre eine Begrenzung auf 1,5 km als maximaler Entfernung zwischen einem Slave und dem Master gegeben. Repeater würden zusätzliche Verzögerungszeiten verursachen, ihr Einsatz würde also dazu

führen, dass die maximal erreichbaren Entfernungen reduziert werden müssten.

Grundsätzlich sind auch noch größere Entfernungen überbrückbar, wenn die Pausenzeit im Master entsprechend verlängert wird. Die physikalischen Grenzen des hier beschriebenen Übertragungsverfahrens werden lediglich durch die Abschwächung der Sendepulse entlang der Leitung und die DC-Spannungsabfälle bei der Versorgung der Teilnehmer bestimmt.

Das AS-Interface-Telegramm, dessen Spannung am Ort des Senders ca. 4,6Vₛₛ beträgt, schwächt sich pro Kilometer Leitungslänge um etwa 10 % ab. Nach 2 km beträgt die Spannung noch ca. 3,7Vₛₛ. Diese Signaldämpfung muss bei der Auslegung der Anpassschaltung ggf. berücksichtigt werden. Sie kann beispielsweise durch eine geeignete Regelschaltung kompensiert werden.

Die wichtigen Vorteile von AS-Interface bleiben erhalten:
- Alle Standard-Komponenten (mit Ausnahme von Repeatern) können wie bisher weiter verwendet werden. Es muss lediglich die erfindungsgemäße Anpassschaltung zwischengeschaltet werden.
- Jede Komponente des AS-Interface-Systems kann an jedem beliebigen Punkt des Netzwerkes angeschlossen werden.
   Das Kabel muss dafür nicht aufgetrennt werden.
- Die Energieversorgung der Slaves und die Kommunikation zwischen Master und Slaves findet auf den gleichen zwei Leitungen statt.

Auch die AS-Interface-Zykluszeit bleibt innerhalb des spezifizierten Rahmens, sie ist nicht länger als sie in einer Standard-Konfiguration mit zwei in Reihe geschalteten Repeatern wäre.

Die Spannungsversorgung-des gesamten Netzes erfolgt über die Busleitung. Das Netzteil liefert die Versorgungsspannung von z. B. 30V DC in das Netzwerk. Dem Netzteil vorgeschaltet ist eine Datenentkopplung, die aus zwei Induktivitäten von je ca. 2000 bis 5000µH besteht. Es können zur besseren Stützung der DC-Spannung je nach Bedarf auch mehrere dieser Netzteile mit Datenentkopplung entlang der Leitung vorgesehen werden. Bei geeigneter Auslegung der Anpassschaltungen sind auch andere (höhere) Spannungen möglich, um den Spannungsabfall entlang der Leitung zu kompensieren bzw. zu reduzieren.

Die Anpassschaltung besteht aus den folgenden Komponenten:
- einem Anschluss an das bis zu 4 km lange Netzwerk und einem Anschluss für die AS-Interface-Teilnehmer
- einer DC-Versorgung der angeschlossenen AS-Interface-Teilnehmer (optional)
- einer AS-Interface-Datenentkopplung, bestehend aus je einer 50µH Drossel parallel zu 39 Ohm (optional),
- einer Schaltung, die die auf dem Netzwerk übertragenen Spannungspulse in Strompulse auf der AS-Interface-Teilnehmerseite und
- einer Schaltung, die die auf der AS-Interface-Teilnehmerseite erzeugten Strompulse 1:1 in Strompulse auf der Netzwerkseite überträgt.

Die Anpassschaltung kann bei Bedarf auch vom Netzwerk galvanisch getrennt ausgeführt werden. Anstelle der einfachen DC-Versorgung der angeschlossenen AS-Interface-Teilnehmer wird dann ein DC/DC-Wandler mit galvanischer Trennung eingesetzt. Die Spannungs-/Stromwandler können beispielsweise mit Hilfe eines Transformators oder eines analog arbeitenden Optokopplers ebenfalls galvanisch getrennt ausgeführt werden.

Da die lange Busleitung durch das neuartige Kommunikationsverfahren relativ unempfindlich gegen kapazitive Last ist, können - wo erforderlich - handelsübliche Überspannungs-Schutzreinrichtungen vorgesehen werden, wenn diese eine Kapazität von <5nF aufweisen. Erst bei noch größeren Kapazitäten würden unerwünschte Reflexionen von der Stelle ausgehen, an der die Überspannungs-Schutzeinrichtung installiert ist.

In einer anderen Ausgestaltung der Erfindung können auch zwei oder mehrere AS-Interface-Teilnetze über die oben beschriebene Leitung und die Anpassschaltungen miteinander verbunden werden. Diese Lösung ersetzt die bisher üblichen AS-Interface-Repeater und erlaubt es, die Teilnetze mehrere Kilometer voneinander entfernt anzuordnen.

Die beiden Varianten unterscheiden sich durch die Art der Spannungsversorgung der Teilnehmer. Selbstverständlich sind auch Konfigurationen realisierbar, bei denen, je nach Erfordernis, beide Varianten an einem Netzwerk betrieben werden.

In einer anderen Ausgestaltung der Erfindung ist es möglich, den Master, den Slave oder die anderen Komponenten und die Anpassschaltung zusammenzuführen und in einem Gehäuse zu integrieren.

In weiterer Ausgestaltung der Erfindung kann die bis zu 4 km lange Busleitung auch durch andere Medien ersetzt werden.

Dies können beispielsweise Stromschienen oder Freileitungen sein. Denkbar ist alternativ der Einsatz von Lichtwellenleitern oder Funkverbindungen.

Besonders vorteilhaft ist die Verwendung des ASI-Interface Netzwerkes in explosionsgefährdeten Bereichen in denen erhöhte Anforderungen zum Schutz vor möglichen Explosionen gestellt werden. Gerade bei der Prozessautomatisierung werden sich immer wieder Bereiche finden, in denen eine explosionsfähige Atmosphäre aus Staub, Gas, Dampf oder Nebel entstehen kann.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- FIG 1: Spannungs-Zeitdiagramm einer Pulsfolge am Master, der mit dem Netzteil an der gleichen Stelle sitzt (Stand der Technik),
- FIG 2: Spannungsimpulsfolge an einem entfernt über eine Leitungslänge von 300 m vom Netzteil liegenden Kommunikationsteilnehmer (Stand der Technik),
- FIG 3: eine erste Ausführungsform eines AS-Interface-Netzwerkes nach der Erfindung,
- FIG 4: eine Anpassschaltung nach FIG 3
- FIG 5: Spannungsimpuls-Zeitdiagramm des Datenverkehrs zwischen einem Master und einem in Entfernung von 600 m entfernt angeordneten Slave,
- FIG 6: eine zweite Ausführungsform eines ASI-Netzwerkes im Vergleich zur FIG 3,
- FIG 7: eine zweite Ausführungsform einer Anpassschaltung und
- FIG 8: eine Ausführungsform einer Anpassschaltung für explosionsgefährdete Bereiche.

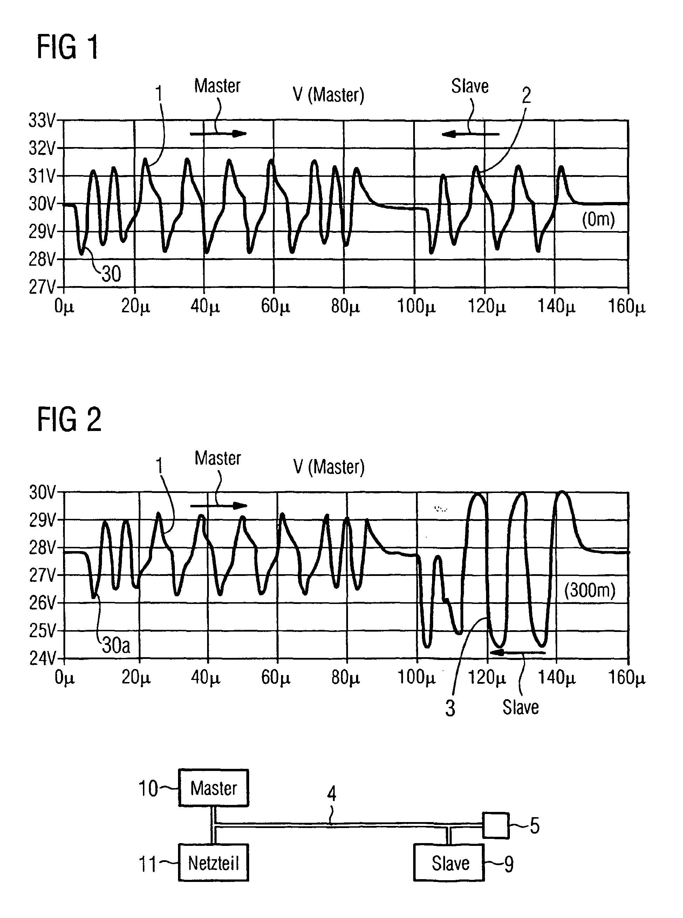

Die FIG 1 und 2 beschreiben eine Anordnung nach dem Stand der Technik, wobei im unteren Teil der FIG 2 der Messaufbau schematisiert dargestellt ist.

Von einem Master 10 werden Spannungsimpulse 1 erzeugt, wobei der Master unmittelbar mit einem Netzteil 11 verbunden ist. Über eine Busleitung 4 ist in einer Entfernung von etwa 300 m ein Slave 9 mit der Busleitung 4 verbunden, wobei nach dem Stand der Technik lediglich ein einziger Abschlusswiderstand 5 vorhanden ist.

Die von dem Master in Richtung auf den Slave gesendete Spannungsimpulsfolge 1 hat die in FIG 1 dargestellte Formgebung und besteht aus relativ steilen Spannungsimpulsen, weil diese durch die Differentation im Netzteil 11 zustande kommen.

Der Slave 9 antwortet mit einer entsprechenden Spannungsimpulskurve, wie dies in FIG 1 dargestellt ist.

Ist jedoch der Slave gemäß FIG 2 in einem Abstand von 300 m entfernt von dem Master 10 auf der Busleitung 4 angeordnet, führen die vom Master gesendeten Spannungsimpulse bei ihrer Ankunft am Slave 9 zu laufzeitverzögerten Spannungsimpulsen 1, wie sich dies durch Vergleich auf der Abszisse der FIG 1 und 2 ergibt.

Der Slave empfängt diese laufzeitverzögerten Spannungsimpulse 1 und antwortet mit einer verzerrten Spannungsimpulsfolge 3, wie dies in FIG 2 dargestellt ist.

Nachdem der Slave 9 nun mit einer verzerrten Spannungsimpulsfolge 3 auf die Busleitung sendet, kann diese Slave-Antwort nicht von allen Kommunikationsteilnehmern mehr verstanden werden. Damit arbeitet das Netz nicht mehr betriebssicher.

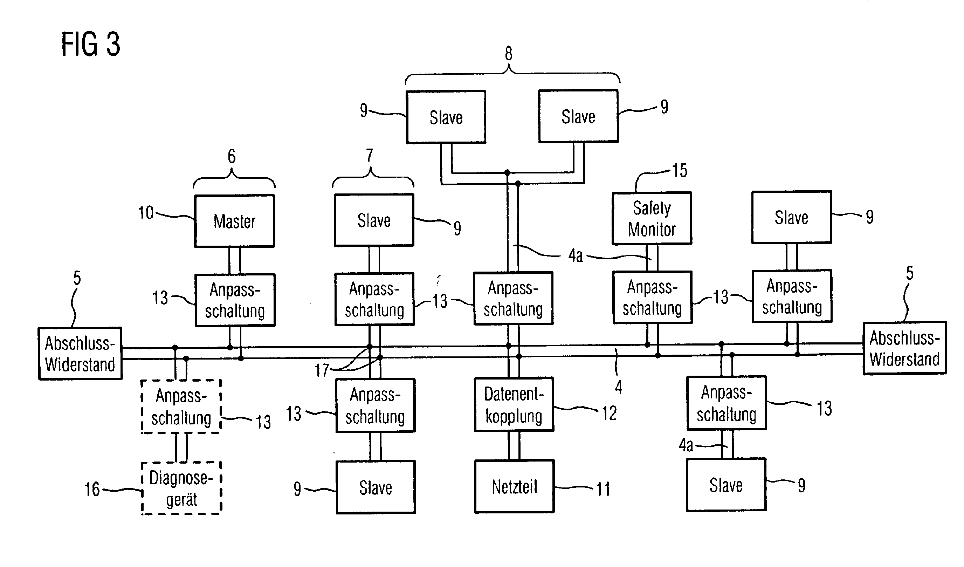

Hier setzt die Erfindung ein, die erfindungsgemäß nach einer ersten Ausführungsform nach FIG 3 vorsieht, dass das Netzteil 11 über eine Datenentkopplung 12 an die Busleitung 4 angeschlossen ist.

Die einzelnen Kommunikationsteilnehmer 6, 7, 8 können sehr unterschiedlich sein.

So besteht der Kommunikationsteilnehmer 6 beispielsweise aus einem Master 10, während der Kommunikationsteilnehmer 7 aus einem Slave 9 besteht und der Kommunikationsteilnehmer 8 aus zwei parallel geschalteten Slaves 9.

Ebenso können weitere Kommunikationsteilnehmer definiert werden, wobei z. B. ein Sicherheitsmonitor 15 vorhanden ist und ein anderer Kommunikationsteilnehmer aus einem Diagnosegerät 16 besteht.

Wichtig nach der Erfindung ist nun, dass jeder Kommunikationsteilnehmer 6, 7, 8 mit einer Anpassschaltung 13 auf die Busleitung 4 angeschaltet ist.

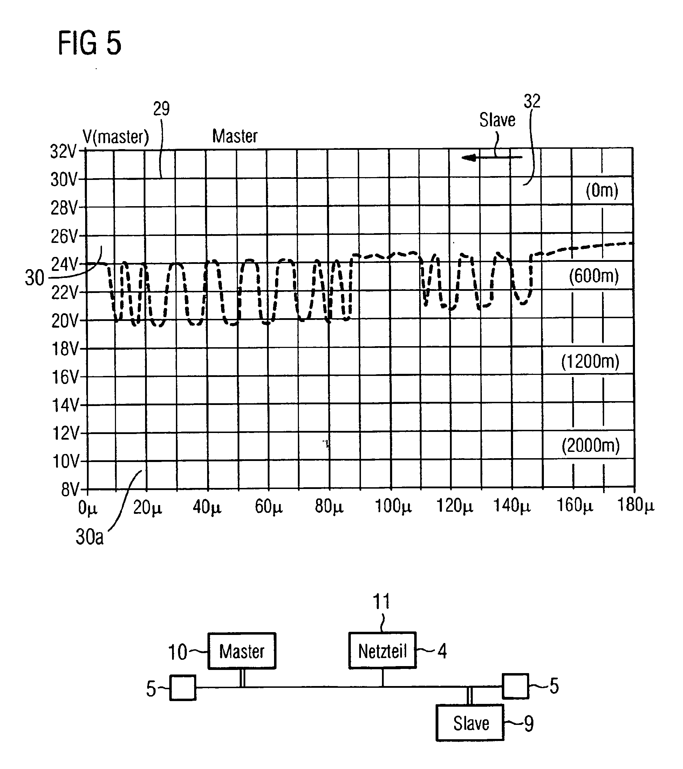

Dies bedeutet eine vollkommen andere Datenübertragung auf der Busleitung als sie vergleichsweise anhand der FIG 1 und 2 erläutert wurde. Diese Datenübertragung wird anhand der FIG 5 näher erläutert.

Im unteren Teil der FIG 5 ist der Messaufbau dargestellt.

Hierbei ist - entsprechend dem Schaltbild in FIG 3 - schematisiert dargestellt, dass die Busleitung 4 nunmehr durch zwei jeweils an einem Ende angeordnete Abschlusswiderstände 5 abgeschlossen ist und dass irgendwo auf der Busleitung 4 ein Netzteil 11 angeordnet ist, wobei es nach der Erfindung nicht mehr auf den Ort des Netzteils ankommt, weil dieses von der Busleitung 4 über den erfindungsgemäßen Datenentkoppler 12 entkoppelt ist.

Es findet deshalb ein völlig anderer Signalverkehr zwischen dem Master 10 und dem bis zu einer Entfernung von 2000 m entfernt angeordneten Slave 9 statt.

Das obere Diagramm in FIG 5 zeigt den Spannungsimpuls 29, der von einem Master 10 ausgeht und die dazugehörende Spannungsimpulsantwort 32 eines Slave 9, der 600 m entfernt sitzt.

Diese Messung des oberen Diagramms hat am Ort des Masters 10 stattgefunden.

Das Spannungsdiagramm in FIG 5 zeigt, dass die Impulsfolge, die vom Master ausgesendet wird, in einer Entfernung von 600 m lediglich laufzeitverzögert, aber unverzerrt ist.

Der Slave sendet ein unverzerrtes Signal zurück, das unverzerrt, oberschwingungsfrei und ohne Überspannungsspitzen ist in Richtung auf den Master 10 zurück. Im Wesentlichen unabhängig von der Leitungslänge der Busleitung 4 sendet der Slave mit einem unverzerrten Signal in Richtung auf den Master 10.

Erreicht wird dies durch den neuartigen Datenverkehr auf der Leitung, nämlich durch die neuartigen Anpassungsschaltungen 13, die jedem Kommunikationsteilnehmer 6-8 zugeordnet sind.

Die Anpassschaltung 13 ist an die Busleitung 4 angekoppelt und führt zunächst in Richtung auf den Kommunikationsteilnehmer 9, 10 eine Spannungsstromwandlung durch.

In umgekehrter Richtung wird wiederum - wenn der Kommunikationsteilnehmer sendet - eine Spannungs-Stromwandlung durchgeführt und die so umgewandelten Impulse auf die Busleitung 4 angekoppelt.

Über die Ankopplung 17 ist somit jeder Kommunikationsteilnehmer 6-8 mit der Busleitung 4 verbunden.

Von dieser Ankopplung 17 zweigt eine weitere Ankopplung 21 ab, wobei im oberen Teil dieser Ankopplung 21 die genannte Spannungs-Stromumwandlung 19 stattfindet, die über das Leitungspaar 26 an den Eingang des Masters 10, des Slave 9 oder eines anderen Teilnehmers 15, 16 zugeleitet wird.

Um nach wie vor eine Stromversorgung des jeweiligen Kommunikationsteilnehmers zu gewährleisten, ist eine zusätzliche Stromversorgung vorgesehen, die durch die Anpassschaltung 13 hindurch greift. Hierzu wird ein DC-Wandler 18 vorgesehen, hinter dem mit einem Kondensator 23 und einer parallelen Drosselschaltung 24 die Differentation der Stromimpulse vorgenommen wird, die - nach dem Stand der Technik - früher im Netzteil 11 stattfand.

Somit wird erfindungsgemäß eine Funktion, die nach dem Stand der Technik früher im Netzteil verwirklicht wurde, erfindungsgemäß in die Anpassschaltung verlegt, die jedem Kommunikationsteilnehmer zugeordnet ist.

In Richtung vom Kommunikationsteilnehmer auf die Busleitung wird über ein weiteres Leitungspaar 25 eine Spannungs-Stromumsetzung vorgenommen, wobei der vom Kommunikationsteilnehmer erzeugte Stromimpuls über den Widerstand 28 in Spannungsimpulse umgewandelt wird und über den I/U-Umsetzer 20 in Strompulse umgesetzt wird.

Es wird noch darauf hingewiesen, dass erfindungsgemäß vorgesehen ist, dass die Anpassschaltung 13 auch unmittelbar im Kommunikationsteilnehmer selbst integriert ist. Es bedarf daher keiner getrennten Anordnung der Anpassschaltung. Die genannten Kommunikationsteilnehmer, wie z. B. ein Slave 9, ein Master 10, ein Sicherheitsmonitor 15 oder ein Diagnosegerät 16 können unmittelbar die erfindungsgemäße Anpassschaltung 13 integriert in sich tragen. Diese reduziert sich auf eine alternative Auslegung des Empfängers, der so aufgebaut wird, dass er die Pulse, die auf der Leitung anstehen, direkt dekodiert.

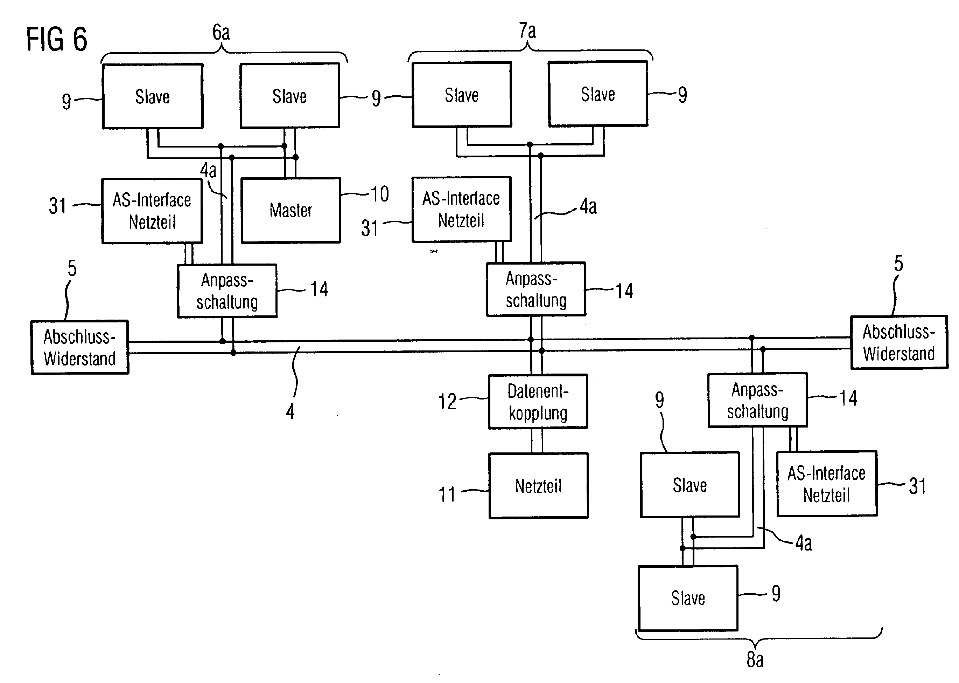

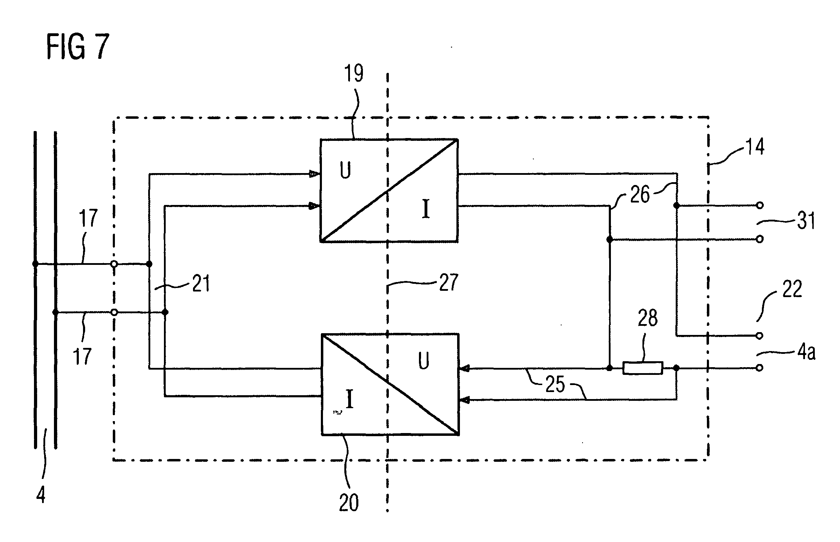

Die FIG 6 und 7 zeigen weitere Ausführungsbeispiele komplexerer Bus-Netzwerke, wo erkennbar ist, dass die insgesamten Kommunikationsteilnehmer 6a, 7a auch wesentlich komplexer ausgebildet sein können.

Der Kommunikationsteilnehmer 6a besteht beispielsweise aus zwei Slaves 9, die von einem gemeinsamen Master 10 angesteuert werden, wobei für diesen Fall noch ein zusätzliches Netzteil 31 vorgesehen werden muss. Bei diesem Netzteil 31 handelt es sich um ein Standard-AS-Interface-Netzteil, wie es zum Stand der Technik gehört.

Auch bei diesen komplexen Kommunikationsteilnehmern 6a, 7a, die zwischen sich eigene Busleitungen 4a führen, ist eine Anpassschaltung 14 erforderlich, wie sie in FIG 7 näher dargestellt ist.

Die FIG 7 zeigt hierbei, dass von der Ankopplung 17 über die Ankopplung 21 ausgehend zwei gegensätzliche Umsetzer 19, 20 vorhanden sind, dass aber bei diesem Ausführungsbeispiel eine galvanische Trennung 27 zwischen den Umsetzern 19, 20 vorhanden ist, um eine vollständige galvanische Entkopplung des jeweiligen Kommunikationsteilnehmers 6a-8a von der Busleitung 4 zu ermöglichen.

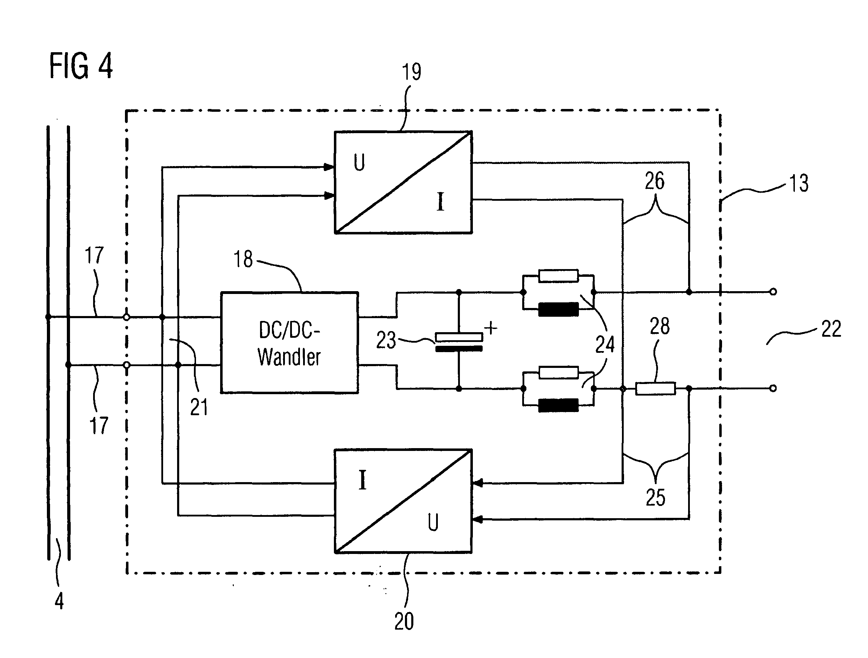

Grund für diese Maßnahme ist, dass ein eigenes Netzteil 31 für jeden Kommunikationsteilnehmer 6a-8a verwendet wird und daher auf eine getrennte Netzteilversorgung, wie sie in FIG 4 von einem zentralen Netzteil 11 erfolgte, verzichtet werden kann.

Die Erfindung-ist nicht darauf beschränkt, das in der erfindungsgemäßen Anpassschaltung ein U/I-Umsetzer und umgekehrt ein I/U-Umsetzer vorhanden ist. In einer anderen Ausgestaltung kann es vorgesehen sein, dass die erfindungsgemäßen Anpassschaltungen 13, 14 unmittelbar selbst in dem Slave 9 integriert sind. In diesem Fall wird der Dekodieralgorithmus, der bisher bei AS-Interface üblich war (siehe FIG 1, FIG 2) so umgestaltet, dass er die Spannungsimpulse nach FIG 5 direkt erkennen und dekodieren kann.

Somit ist klargestellt, dass es nicht auf die Ausbildung der Anpassungsschaltungen 13, 14 ankommt, sondern dass das Wesen der vorliegenden Erfindung darin liegt, dass ein völlig andersartiger Datenverkehr auf der Busleitung 4 stattfindet. Dies daher, dass die nicht mehr vom Netzteil differenzierten Impulse über die Busleitung übertragen werden, sondern dass auf die Differentation der Spannungsimpulse verzichtet wird und stattdessen unverformte Spannungsimpulse störungsfrei übertragen werden. Der damit verbundene Mehraufwand in Form der Anpassschaltungen 13, 14 wird dadurch gerechtfertigt, dass nunmehr wesentlich längere Busleitungen verwendet werden können.

Im Endeffekt ist kein Mehraufwand notwendig, denn die Anpassschaltungen können unmittelbar in die Master-Slave 9,10 integriert werden, was lediglich mit einer Änderung der vorhandenen ASIC-Schaltungen verbunden ist.

Es wird dem gemäß nur der Empfangsalgorithmus im Slave-Empfänger modifiziert.

Die am Netzteil 11 vorgesehene Datenentkopplung 12 in Richtung auf die Busleitung 4 muss nicht notwendigerweise getrennt vom Netzteil 11 angeordnet werden. Sie kann selbstverständlich im Netzteil integriert werden. In einer einfachen Ausführungsform besteht die Datenentkopplung aus zwei Induktivitäten, von denen die eine im Plus-Pfad und die andere im Minus-Pfad liegt.

Es ist selbstverständlich möglich, die genannten zwei Induktivitäten auch elektronisch nachzubilden, so dass auf die Verwendung von Spulen verzichtet werden kann.

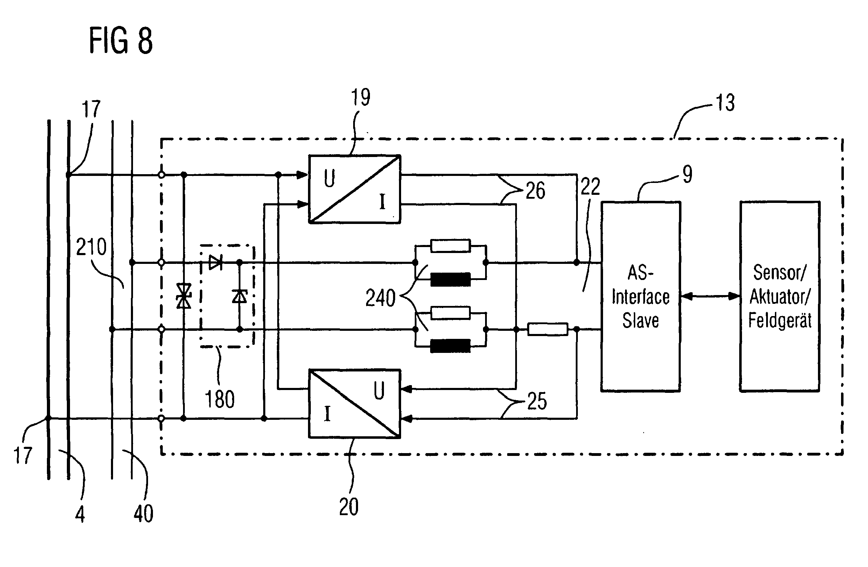

In FIG 8 ist eine weitere Ausführungsform der erfindungsgemäßen Anpassschaltung dargestellt. Zusammen mit dem, der Anpassschaltung nachfolgenden, Slave ist diese Anpassschaltung besonders für explosionsgefährdete Bereiche geeignet.

Gerade in der Prozessautomatisierung werden sich Teile des ASI-Interface-Netzwerkes, insbesondere deren elektrische Betriebsmittel wie zum Beispiel die Slaves mit den Sensoren, Aktoren oder Feldgeräten, immer wieder in solchen explosionsgefährdeten Bereichen befinden. In diesen so genannten Ex-Bereichen sind häufig Staube, Gase oder Dämpfe vorzufinden die durch elektrische Funken des darin befindlichen Betriebsmittels unbeabsichtigt zur Explosion gebracht werden könnten.

Die Norm EN 50014 enthält dazu allgemeine Bestimmungen für die Bauart und Prüfung dieser elektrischen Betriebsmittel die für solche explosionsgefährdete Bereiche bestimmt sind. ASI-Interface-Netzwerke für die gemischte Installation, das heißt Bereichen mit Ex- und Nicht-Ex-Zonen, müssen somit beispielsweise in der Zündschutzart Ex-e verlegt werden. Die Zündschutzart Ex-e (erhöhte Sicherheit), die durch die Norm EN 50012 festgelegt ist, erfordert dazu zusätzliche Maßnahmen zur Vermeidung von Zündfunken. Bei Slaves, die nach der Zündschutzart Ex-d (drucksichere Kapselung) nach der Norm EN 50018 ausgeführt sind, sind zusätzliche Zenerbarrieren zur sicheren Speisung vorgesehen. Die vorliegende Erfindung findet aber auch bei weiteren Zündschutzarten, wie beispielsweise der Eigensicherheit nach EN 50020 genauso Verwendung.

Bei den aus dem Stand der Technik bekannten ASI-Interface-Netzwerken mussten bisher zusätzliche Maßnahmen, wie beispielsweise metallische Rohre zur Abschirmung, vorgesehen werden um die Zündschutzart Ex-e einzuhalten.

Dadurch, dass beim erfindungsgemäß ausgebildete ASI-Interface-Netzwerk nun die Differentation der über den Bus übertragenen Kommunikationssignale nicht mehr im Netzteil, sondern erst in der Anpassschaltung, das heißt am Ort des Slaves stattfindet, können ohne weitere Abschirmmaßnahmen die für die geforderten Zündschutzarten erforderlichen Bedingungen eingehalten werden.

Die in FIG 8 dargestellte Ausführungsform ist weitgehend identisch mit der in FIG 4 dargestellten Ausführungsform der Anpassschaltung 13. Neben den Drosselschaltungen 240 sind hier ergänzend Dioden 180 vorgesehen über die die Anpassschaltung 13 an eine sichere Speisung 40 angeschlossen ist. Das an der Stelle 210 mit der Anpassschaltung verbundene Netzwerk zur sicheren Speisung 40 ist dabei vorzugsweise räumlich wie die Busleitung 4 angeordnet und versorgt die verschiedenen Slaves 9 des ASI-Interface-Netzwerkes mit der notwendigen Versorgungsspannung. Die eigentliche "sichere Speisung" (hier nicht näher dargestellt) befindet sich dabei wie auch der in FIG 3 dargestellte Master 6 und das Netzteil 11 im Nicht-Ex-Bereich, während sich die einzelnen Slaves 9 im Ex- aber auch in Nicht-Ex-Bereichen befinden können.

Mit dem erfindungsgemäßen ASI-Interface-Netzwerk lassen sich somit alle Anforderungen für ein komplexes Netzwerk in der Prozessautomatisierung, bei der unter anderem die Zündschutzarten zu beachten sind und gleichzeitig große Strecken überbrückt werden müssen, erfüllen. So können die Busleitungen zur Kommunikation zwischen dem Master und den Slaves mit Spannungen beispielsweise unter +/- 4,2 V betrieben werden, wie sie von Feldbussen wie beispielsweise ProfiBus her bekannt sind. Zudem ist die Busleitung galvanisch von der Energieversorgung getrennt. Weiterhin kann die Energieversorgung der Slaves über eine sichere Speisung mit Spannungen beispielsweise unter 15 V erfolgen. Durch die geringen Spannungen und damit den geringeren Energieeintrag müssen beim ASI-Interface-Netzwerk keine zusätzlichen Abschirmungen vorgesehen werden, was die Installation weiter vereinfacht.

Somit kann mit der vorliegenden Erfindung nun auch der Bereich der Prozessautomatisierung, wo häufig Ex-Bereiche anzutreffen sind, abgedeckt werden. Wird die gesamte Installation vorzugsweise in der Zündschutzart Ex-i ausgeführt, so können Umbauarbeiten oder die Erweiterung des Busses oder der Austausch von Komponenten unter Ex- Bedingungen stattfinden, was den Einsatz sehr einfach und damit kostengünstig macht.

## Patentansprüche

1. AS-Interface-Netzwerk mit einer Mehrzahl von Kommunikationsteilnehmern(6-8), die als Master oder als Sensoren und/oder Aktuatoren ausgebildet und über jeweils eine Anpassschaltung (13) an eine Busleitung (4) angeschlossen sind und über mindestens ein an der Busleitung (4) angeschlossenes Netzteil(11) mit Strom versorgt werden, wobei eine Datenübertragung zwischen Kommunikationsteilnehmern(6-8) vorgesehen ist, **dadurch gekennzeichnet,**
- **dass** das Netzteil (11) über eine Datenentkopplung (12) an die Busleitung (4) angeschlossen ist,
- **dass** nicht differenzierte Spannungsimpulse zwischen den Kommunikationsteilnehmern (6-8) über die Busleitung (4) übertragen werden,
- **dass** die von einem Sender über die Busleitung (4) gegebenen Spannungsimpulse über die jeweils eine Anpassschaltung (13) dem jeweiligen Kommunikationsteilnehmer (6-8) zugeleitet werden und
- **dass** diese Spannungsimpulse in der Anpassschaltung (13) in Stromimpulse umgesetzt und diese in der Anpassschaltung (13) selbst oder in einem an die Anpassschaltung (13) angeschlossenen AS-Interface-Netzteil eines angeschlossenen Teilnetzwerks differenziert werden und so dem Kommunikationsteilnehmer (6-8) spezifikationsgemäß zur Verfügung stehen.

2. AS-Interface-Netzwerk nach Anspruch 1, **dadurch gekennzeichnet, dass** die Datenübertragung an jedem Ort der Leitung zu einer Folge von Spannungsänderungen führt, die von dem Empfänger, der an die Anpassschaltung(13) angeschaltet ist, ausgewertet werden und dass die übertragenen Spannungsimpulse den gesendeten Stromimpulsen direkt proportional sind.

3. AS-Interface-Netzwerk nach einem der Anspruch 1 oder 2, **dadurch gekennzeichnet, dass** dem Netzteil (11) eine Datenentkopplung (12) vorgeschaltet ist, die aus zwei Induktivitäten von je ca. 2000 bis 5000µH besteht.

4. AS-Interface-Netzwerk nach einem der Ansprüche 1 bis 3, **dadurch gekennzeichnet, dass** die Anpassschaltung (13) vom Netzwerk galvanisch getrennt ausgeführt ist.

5. AS-Interface-Netzwerk nach einem der Ansprüche 1 bis 4, **dadurch gekennzeichnet, dass** zwei oder mehrere AS-Interface-Teilnetze über Anpassschaltungen (13) miteinander verbunden sind.

6. AS-Interface-Netzwerk nach einem der Ansprüche 1 bis 5, **dadurch gekennzeichnet, dass** die Anpassschaltung (13) an die Busleitung (4) angekoppelt ist und in Richtung auf den Kommunikationsteilnehmer (9, 10) eine Spannungsstromwandlung durchführt, sowie eine Spannungs-Stromwandlung durchführt, wenn der Kommunikationsteilnehmer(9, 10) sendet und die so umgewandelten Impulse auf die Busleitung (4) koppelt.

7. AS-Interface-Netzwerk nach einem der Ansprüche 1 bis 6, **dadurch gekennzeichnet, dass** eine Stromversorgung vorgesehen ist, die durch die Anpassschaltung (13) hindurch greift und dass ein DC-Wandler (18) vorhanden ist, hinter dem mit einem Kondensator (23) und einer parallelen Drosselschaltung (24) eine Differentation der Stromimpulse vorgenommen wird.

8. AS-Interface-Netzwerk nach einem der Ansprüche 1 bis 7, **dadurch gekennzeichnet, dass** die Anpassschaltung (13) unmittelbar im Kommunikationsteilnehmer (6-8) integriert ist.

9. Verwendung des ASI-Interface-Netzwerkes nach einem der Ansprüche 1 bis 8 in explosionsgefährdeten Bereichen, insbesondere bei der Prozessautomatisierung.

## Claims

1. AS interface network with a plurality of communication parties (6-8), which are designed as masters or as sensors and/or actuators, and are connected respectively by way of an interface circuit (13) to a bus line (4) and are supplied with power by way of at least one power supply unit (11) connected to the bus line (4), with a data transmission being provided between communication parties (6-8), **characterised in that**
- the power supply unit (11) is connected to the bus line (4) by way of a data uncoupling unit (12),
- undifferentiated voltage pulses are transmitted between the communication parties (6-8) by way of the bus line (4),
- the voltage pulses sent from a transmitter by way of the bus line (4) are routed to the respective communication party (6-8) by way of the one interface circuit (13) in each instance and
- these voltage pulses are converted to current pulses in the interface circuit (13) and these current pulses are differentiated in the interface circuit (13) itself or in an AS interface power supply unit of a connected sub-network connected to the interface circuit (13) and thus made available to the communication party (6-8) according to specification.

2. AS interface network according to claim 1, **characterised in that** the data transmission results at each point of the line in a series of voltage changes, which are evaluated by the receiver, which is connected to the interface circuit (13), and the transmitted voltage pulses are directly proportional to the current pulses sent.

3. AS interface network according to one of claims 1 or 2, **characterised in that** a data uncoupling unit (12) is connected upstream of the power supply unit (11), said data uncoupling unit (12) consisting of two inductances of approx. 2000 to 5000 µH each.

4. AS interface network according to one of claims 1 to 3, **characterised in that** the interface circuit (13) is embodied as electrically isolated from the network.

5. AS interface network according to one of claims 1 to 4, **characterised in that** two or more AS interface sub-networks are connected to one another by way of interface circuits (13).

6. AS interface network according to one of claims 1 to 5, **characterised in that** the interface circuit (13) is coupled to the bus line (4) and performs a voltage to current conversion in the direction of the communication party (9, 10) and performs a voltage to current conversion when the communication party (9, 10) sends and couples the pulses thus converted to the bus line (4).

7. AS interface network according to one of claims 1 to 6, **characterised in that** a power supply is provided, which acts through the interface circuit (13) and a DC converter (18) is present, behind which differentiation of the current pulses is undertaken with a capacitor (23) and a parallel throttle circuit (24).

8. AS interface network according to one of claims 1 to 7, **characterised in that** the interface circuit (13) is integrated directly in the communication party (6-8).

9. Use of the AS interface network according to one of claims 1 to 8 in areas where there is an explosion risk, particularly for process automation.

## Revendications

1. Réseau d'interfaces actionneurs-capteurs ayant une multiplicité de participants ( 6 à 8 ) à la communication qui sont constitués en maîtres ou en capteurs et/ou en actionneurs et qui sont raccordés par, respectivement, un circuit ( 13 ) d'adaptation à une ligne ( 4 ) de bus et sont alimentés en courant électrique par au moins un réseau ( 11 ) raccordé à la ligne ( 4 ) de bus, une transmission de données étant prévue entre les participants ( 6 à 8 ) à la communication, **caractérisé**
- **en ce qu'**une partie de réseau ( 11) est raccordée à la ligne ( 4 ) de bus par un découplage ( 12) de données ;
- **en ce que** des impulsions de tension non différenciées sont transmises entre les participants ( 6 à 8 ) à la communication par l'intermédiaire de la ligne ( 4 ) de bus ;
- **en ce que** les impulsions de tension données par un émetteur par l'intermédiaire de la ligne ( 4 ) de bus sont envoyées aux participants ( 6 à 8 ) à la communication respectifs par le circuit ( 13 ) d'adaptation respectif ; et
- **en ce que** ces impulsions de tension sont transformées dans le circuit ( 13) d'adaptation en des impulsions de courant et celles-ci sont différenciées dans le circuit ( 13 ) d'adaptation soi-même ou dans une partie de réseau d'interfaces actionneurs-capteurs, raccordée au circuit ( 13 ) d'adaptation, d'un réseau raccordé et sont ainsi mises à disposition suivant une spécification du participant ( 6 à 8 ) à la communication.

2. Réseau d'interfaces actionneurs-capteurs suivant la revendication 1, **caractérisé en ce que** la transmission de données donne à chaque emplacement de la ligne une succession de variations de tension qui sont exploitées par le récepteur qui est branché sur le circuit ( 13 ) d'adaptation et **en ce que** les impulsions de tension transmises sont directement proportionnelles aux impulsions de courant émises.

3. Réseau d'interfaces actionneurs-capteurs suivant l'une des revendications 1 ou 2, **caractérisé en ce qu'**un découplage ( 12 ) de données, qui est constitué de deux inductances de respectivement environ 2000 à 5000 µH, est monté en amont de la partie ( 11 ) de réseau.

4. Réseau d'interfaces actionneurs-capteurs suivant l'une des revendications 1 à 3, **caractérisé en ce que** le circuit ( 13 ) d'adaptation est réalisé en étant séparé galvaniquement du réseau.

5. Réseau d'interfaces actionneurs-capteurs suivant l'une des revendications 1 à 4, **caractérisé en ce que** deux ou plusieurs sous-réseaux d'interfaces actionneurs-capteurs sont reliés entre eux par des circuits ( 13 ) d'adaptation.

6. Réseau d'interfaces actionneurs-capteurs suivant l'une des revendications 1 à 5, **caractérisé en ce que** le circuit ( 13 ) d'adaptation est couplé à la ligne ( 4 ) de bus et une conversion tension-courant est effectuée en direction du participant ( 9,10 ) à la communication, ainsi qu'une conversion tension-courant, lorsque le participant ( 9,10 ) à la communication émet et couple les impulsions ainsi converties sur la ligne ( 4 ) de bus.

7. Réseau d'interfaces actionneurs-capteurs suivant l'une des revendications 1 à 6, **caractérisé en ce qu'**il est prévu une alimentation en courant qui passe dans le circuit ( 13 ) d'adaptation et **en ce qu'**il est prévu un convertisseur ( 18 ) de courant continu derrière lequel une différenciation des impulsions de courant est effectuée par un condensateur ( 23 ) et par un circuit ( 24 ) à bobine en parallèle.

8. Réseau d'interfaces actionneurs-capteurs suivant l'une des revendications 1 à 7, **caractérisé en ce que** le circuit ( 13 ) d'adaptation est intégré directement aux participants ( 6 à 8 ) à la communication.

9. Utilisation du réseau d'interfaces actionneurs-capteurs suivant l'une des revendications 1 à 8, dans des zones en danger d'explosion, notamment dans l'automatisation de processus.
